# EUROPÄISCHE PATENTSCHRIFT

(11) **EP 1 975 599 B1**
(45) Veröffentlichungstag und Bekanntmachung des Hinweises auf die Patenterteilung: **04.11.2009**
(21) Anmeldenummer: 08005959.5
(22) Anmeldetag: 28.03.2008
(51) Int. Cl.: G01N 21/15, B01F 15/00, B08B 1/00, B08B 7/02

(54) **Verfahren zur Überwachung der optischen Durchlässigkeit eines Beobachtungsfensters und Einrichtung zur Reinigung eines Beobachtungsfensters**
Method for monitoring optical permeability of an observation window and device for cleaning an observation window
Procédé de surveillance de la perméabilité optique d'une fenêtre d'observation et dispositif de nettoyage d'une fenêtre d'observation

(30) Priorität: 28.03.2007 DE 102007014844
(43) Veröffentlichungstag der Anmeldung: 01.10.2008
(73) Patentinhaber: Glatt Systemtechnik GmbH, 01277 Dresden (DE)
(72) Erfinder: Pritzke, Heinz, 01737 Kesselsdorf (DE); Mannhardt, Joachim, 73569 Eschach (DE)
(74) Vertreter: Pätzelt, Peter

(56) Entgegenhaltungen:
- EP-A- 0 631 810
- WO-A-01/60503
- WO-A-03/078975
- DE-A1- 3 521 737
- US-A1- 2005 005 717

## Beschreibung

### Erfindungsgebiet

Die Erfindung betrifft ein Verfahren zur Überwachung der optischen Durchlässigkeit eines Beobachtungsfensters nach dem Oberbegriff des Anspruchs 1 sowie eine Einrichtung zur Reinigung eines Beobachtungsfensters nach Anspruch 3.

### Hintergrund der Erfindung

Beim Mischen mehrerer pulver- oder granulatförmiger Produkte, insbesondere in der pharmazeutischen Industrie, wird der Verfahrensfortschritt zunehmend im Sinne von PAT (Process Analytical Technology) mit spektroskopischen oder fotometrischen Verfahren überwacht und gesteuert. Dabei ist es Ziel, die Mischgüte und in der Folge den Zeitpunkt des Abschlusses des Mischprozesses durch eine online Analytik zu bestimmen. Gängige Analysemethoden sind optische, akustische und Terahertz Spektroskopie. Bei den optischen Methoden kommt die UV-VIS, NIR Reflektions-Spektroskopie und Fluoreszenz-Spektroskopie zum Einsatz.

Die Beobachtung der Mischvorgänge muss zwangsläufig durch ein Beobachtungsfenster erfolgen. Die spektroskopische Analyse erfolgt dabei in der Position des Mischers, wenn das Mischgut auf dem Beobachtungsfenster aufliegt. Die Analyse kann auch permanent erfolgen, wobei Messergebnisse, die von realen Werten abweichen, da das Mischgut nicht am Beobachtungsfenster aufliegt, durch geeignete Software ausgefiltert werden.

Nach dem Stand der Technik sind verschiedene Anwendungen von spektroskopischen Verfahren bei Mischvorgängen bekannt. Beispielsweise offenbart die EP 1 265 694 B1 eine Vorrichtung und ein Verfahren zum Mischen von Komponenten, die gewöhnlich in Form von Pulvern vorliegen. Die Vorrichtung umfasst einen Kessel zur Aufnahme der Komponenten, Antriebsmittel zum Drehen des Kessels um eine Achse und mindestens ein spektroskopisches Überwachungsmittel zur Überwachung von Änderungen des spektroskopischen Profils des Gemisches im Laufe des Mischvorganges, welches lagegenau zu einem Fenster im Kessel positioniert werden kann. Das Überwachungsmittel, kann direkt oder indirekt am Kessel angeordnet sein.

Bei allen derartigen Verfahren und Vorrichtungen kann es während des Mischvorganges zu Ablagerungen oder Verschmutzungen auf dem Fenster im Kessel kommen. Derartige Verunreinigungen des Fensters können jedoch nicht festgestellt und auch nicht vom Analysesignal des Mischgutes unterschieden werden. Sie führen zu einer negativen Beeinflussung der Transmissionseigenschaft des Fensters und führen zu fehlerhaften Messwerten.

Zur Messung des Verschmutzungsgrades eines Fensters sind verschiedene Verfahren bekannt. Die DE 35 21 737 A1 gibt eine Kontrollvorrichtung zur Feststellung des Grades der_Durchsichtigkeit von Scheiben, insbesondere Kfz-Windschutzscheiben, an. Eine Messvorrichtung für den Verschmutzungsgrad mit mindestens einen lichtabhängigen Messgeber und einer Vergleichsschaltung kann eine Reinigungsvorrichtung auslösen. Die Vorrichtung weist eine periodisch öffnende Blende oder Klappe auf.

In der JP 08068754 A wird ein Verfahren zur Messung der Transparenz einer Monitorscheibe in einer Plasma-Ätzeinrichtung angegeben. Die austauschbare-Monitorscheibe aus Quarzglas wird von außen schräg mit einem vorbestimmten Licht bestrahlt und das reflektierte Licht wird von einem optischen Sensor gemessen. Die Prozessdaten werden mit einem Computer ausgewertet und angezeigt.

In der DE 195 41 516 C2 wird eine Vorrichtung zur optischen "in-situ"-Bestimmung der Sauerstoffkonzentration angegeben, an der eine Verschmutzungskontrolle vorgesehen ist. Ein Diodenlaser durchstrahlt das Untersuchungsvolumen und eine Photodiode detektiert die transmittierte Strahlung, wobei deren Signal mit der doppelten Modulationsfrequenz demoduliert wird, das direkt proportional zur Absorptionsstärke und damit der Konzentration des Sauerstoffs im Untersuchungsvolumen ist. In einem zweiten, dazu parallelen Strahlengang ist ein weiter Diodenlaser mit einer von der Absorptionswellenlänge verschiedenen Wellenlänge und eine weitere Photodiode vorgesehen, deren Signal zur Verschmutzungskorrektur des von der Photodiode im Messstrahlengang erhaltenen Signals verwendet wird.

### Zusammenfassung der Erfindung

Die Erfindung wird im Hauptanspruch definiert und charakterisiert, während die abhängigen Ansprüche weitere Merkmale der Erfindung beschreiben.

Zweck der Erfindung ist es, für Verfahren und Einrichtungen zur Anwendung von spektroskopischen oder fotometrischen Verfahren bei Mischvorgängen in einem Mischbehälter nach dem Stand der Technik ein Verfahren zur Überwachung der Transmissionseigenschaft des Beobachtungsfensters sowie eine Einrichtung zur Reinigung des Beobachtungsfensters anzugeben. Für die Erfindung ist es dabei unwesentlich, ob ein spektröskopisches oder fotometrisches Verfahren angewandt wird. Deshalb wird nachfolgend, einschließlich der Patentansprüche, verallgemeinert nur auf spektroskopische Verfahren Bezug genommen.

Die Erfindung löst die Aufgabe für das Verfahren durch die im Anspruch 1 angegebenen Merkmale. Die Aufgabe für die Einrichtung wird durch die Merkmale im Anspruch 3 gelöst. Vorteilhafte Weiterbildungen der Erfindung sind in den jeweiligen Unteransprüchen gekennzeichnet und werden nachstehend zusammen mit der Beschreibung der bevorzugten Ausführung der Erfindung, einschließlich der Zeichnung, näher dargestellt.

Das erfindungsgemäße Verfahren wird parallel zu einem bekannten Verfahren der spektroskopischen Analyse der Homogenität eines Mischgutes in einem Mischbehälter über ein Beobachtungsfenster eingesetzt. Der Sensor ist außerhalb des Mischbehälters am Beobachtungsfenster positioniert und die spektroskopischen Daten des Mischgutes werden während des Mischens permanent oder periodisch erfasst.

Erfindungsgemäß wird in der Analyseeinheit ein produktspezifischer Grenzwert für die spektroskopischen Daten gespeichert. Dieser Grenzwert wird durch die für das Mischgut zu erwartenden spektroskopischen Daten bestimmt, wenn sich das Mischgut auf dem Beobachtungsfenster befindet und im Gegensatz dazu, wenn das Beobachtungsfenster frei von Mischgut ist. Weiterhin wird in Abhängigkeit der technologischen Werte des Mischverfahrens, insbesondere der Umdrehungsgeschwindigkeit des Mischbehälters, eine Zeit vorgegeben, innerhalb der die spektroskopischen Daten unterhalb des produktspezifischen Grenzwertes sinken müssen. D.h. wenn die Datensignale unter den Grenzwert fallen, werden am Beobachtungsfenster geringe oder im günstigsten Fall keine spektroskopische Daten gemessen. Das bedeutet, dass das Beobachtungsfenster frei von störenden Ablagerungen und somit sauber ist.

Wenn anderenfalls innerhalb einer vorgegebenen Zeit die Datensignale nicht unterhalb des produktspezifischen Grenzwertes gesunken sind, bedeutet dies, dass auf dem Beobachtungsfenster Ablagerungen des Mischgutes vorhanden sind und die Messungen falsch oder ungenau sind. In diesem Fall wird von der Analyseeinheit ein Signal ausgegeben, welches die Information beinhaltet, dass das Beobachtungsfenster unzulässig stark verschmutzt ist. Im Ausführungsbeispiel I werden dazu umfassendere Ausführungen gemacht.

Im einfachsten Fall kann das Signal der Analyseeinheit als akustisches oder optisches Signal für den Anlagenbediener bestimmt sein, dass dieser entsprechende Maßnahmen zur Reinigung des Beobachtungsfensters einleitet.

Entsprechend Anspruch 2 wird eine Lösung vorgeschlagen, das Signal der Analyseeinheit einer Schalteinheit zuzuführen, die eine Reinigungsvorrichtung zur Reinigung der inneren Oberfläche des Beobachtungsfensters in Betrieb setzt.

Die Einrichtungen zur Reinigung des Beobachtungsfensters für die spektroskopische Analyse der Homogenität eines Mischgutes in einem Mischbehälter umfasst eine Analyseeinheit, deren Sensor außerhalb des Mischbehälters am Beobachtungsfenster positioniert ist. Erfindungsgemäß ist eine Reinigungseinrichtung zur Reinigung des Beobachtungsfensters sowie eine Schalteinheit zur Inbetriebsetzung der Reinigungseinrichtung vorhanden.

Des Weiteren weist die Analyseeinheit einen Speicher auf, in dem ein produktspezifischer Grenzwert für die spektroskopischen Daten gespeichert werden kann, welcher durch die für das Mischgut zu erwartenden spektroskopischen Daten bestimmt wird, wenn sich das Mischgut auf dem Beobachtungsfenster befindet und wenn das Beobachtungsfenster frei von Mischgut ist. Die Analyseeinheit ist geeignet, ein Signal auszugeben, wenn der produktspezifische Grenzwert während des Mischvorganges innerhalb einer vorgegebenen Zeit nicht unterschritten wird. Die Analyseeinheit ist derart mit der Schalteinheit verbunden, dass mit dem Anliegen des Signals die Schalteinheit die Reinigungseinrichtung in Betrieb setzen kann.

Als Reinigungseinrichtung kann eine mechanische Wischvorrichtung mit einem Segment-Drehwischer oder einem linearen Mischer vorhanden sein. Die Reinigungseinrichtung kann auch in Form eines Vibrators ausgeführt sein, der außerhalb des Mischbehälters angeordnet und mit dem Beobachtungsfenster verbunden ist. Der Vibrator ist geeignet, das Beobachtungsfenster derart in Vibration zu versetzen, dass Ablagerungen durch die Schwerkraft abfallen. Bei der Anwendung der Einrichtung ist Wesentlich, dass die Wischvorrichtung oder der Vibrator nur betrieben werden, wenn von einem Positionsmelder für die Lage des Mischgutes ein Signal bereit gestellt wird, dass sich kein Mischgut auf dem Beobachtungsfenster befindet. Dazu ist der Positionsmelder derart mit der Schalteinheit verbunden, dass die Reinigungseinrichtung nur in Betrieb gesetzt werden kann, wenn das Signal der Analyseeinheit und das Signal des Positionsmelders parallel an der Schalteinheit anliegen.

Die technischen Ausführungen des Wischers bzw. des, Vibrators können im Rahmen des allgemein bekannten Standes der Technik variieren. Der Wischer kann eine Drehbewegung oder eine lineare Bewegung ausführen. Regelmäßig wird der Wischer eine elastische Wischerleiste aufweisen, die unmittelbar auf dem Beobachtungsfenster aufliegt und die Ablagerung schonend abwischt.

Bei der Anwendung eines Vibrators ist es vorteilhaft, dass das Beobachtungsfenster elastisch in der Wand des Mischbehälters gehaltert ist oder die Wand eine genügend große Elastizität aufweist. In der Praxis konnte auch an größeren Behältern mit entsprechend stärkeren Wanddicken eine für die Anwendung eines Vibrators ausreichende Elastizität nachgewiesen werden.

### Kurze Beschreibung der Zeichnungen

Das Verfahren und die Einrichtung werden nachfolgend in drei Ausführungsbeispielen näher erläutert. Zugehörig zum Ausführungsbeispiel I zeigt Figur 1 einen Schwenkwischer, zum Ausführungsbeispiel II zeigt Figur 2 eine Drehfenster und Figur 3 zeigt zum Ausführungsbeispiel III eine Schwenkscheibe.

### Detaillierte Beschreibung bevorzugter Ausführungsformen Ausführungsbeispiel I

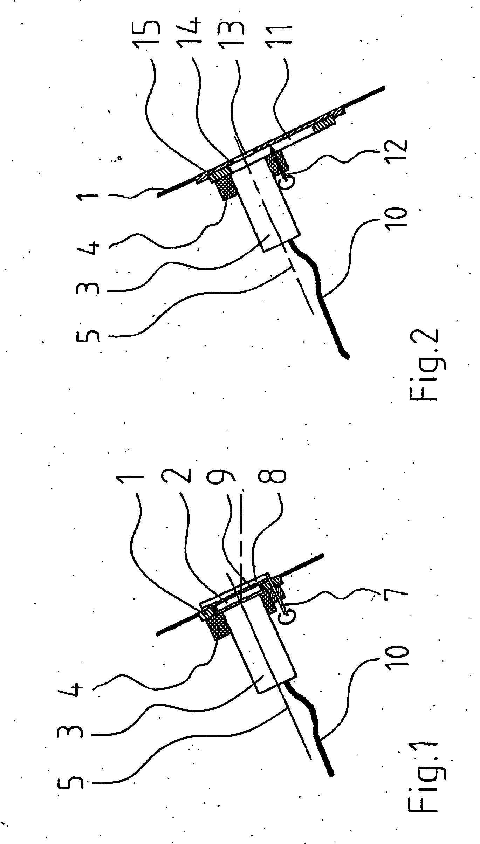

Im Ausführungsbeispiel I mit der Figur 1 ist in der Behälterwand 1 eines Mischbehälters ein Beobachtungsfenster 2 derart angeordnet, dass das Beobachtungsfenster 2 etwa auf der gleichen Ebene wie die innere Oberfläche der Behälterwand 1 liegt oder geringfügig über diese erhöht ist.

Ein Sensor 3, zugehörig zur Analyseeinheit für die spektroskopische Analyse der Homogenität des Mischgutes im. Mischbehälter, ist über eine Halteeinrichtung 4 außen an der Behälterwand 1 und in der Achse 5 des Beobachtungsfensters 2 gehaltert. Das vereinfacht mit Sensor 3 bezeichnete Bauteil kann in der Praxis im zusammenwirken mit der Analyseeinheit weitere Bauelemente enthalten. Über ein Verbindungskabel 10 wird die elektrische Verbindung zwischen der nicht dargestellten Analyseeinheit und dem Sensor 3 hergestellt.

Parallel zur Achse 5 ist in der Halteeinrichtung 4 weiterhin eine Schwenkwelle 7 gelagert, an deren inneren Ende ein Schwenkwischer 8 vorgesehen ist. Der Schwenkwischer 8 weist zum Beobachtungsfensters 2 hin ein Wischelement 9 auf.

Zum Betrieb des Schwenkwischers 8 ist eine beliebige, in der Zeichnung nicht dargestellt Schwenkeinrichtung außerhalb des Mischbehälters vorgesehen, die mit der Schwenkwelle 7 in Verbindung steht und von einem Signal der Analyseeinheit angesteuert werden kann.

Nachfolgend wird die Einrichtung in Anwendung des erfindungsgemäßen Verfahrens näher beschrieben. Entsprechend dem Stand der Technik werden verschiedene pulverförmige Ausgangsprodukte in den Mischbehälter eingebracht und durch Drehung gemischt. Der Verfahrensfortschritt wird bespielhaft mit dem Verfahren der NIR Reflektions-Spektroskopie überwacht und gesteuert. Erfindungsgemäß wird dabei in der Analyseeinheit ein produktspezifischer Grenzwert für die spektroskopischen Daten gespeichert, der durch die für das Mischgut zu erwartenden spektroskopischen Daten bestimmt wird, wenn sich das Mischgut auf dem Beobachtungsfenster 2 befindet und wenn das Beobachtungsfenster 2 frei von Mischgut ist. In Abhängigkeit der technologischen Werte des Mischverfahrens wird eine Zeit vorgegeben, innerhalb der die spektroskopischen Daten unterhalb des produktspezifischen Grenzwertes sinken müssen. D.h. die spektroskopischen Daten liegen an, wenn das Mischgut auf dem Beobachtungsfenster 2 aufliegt. Im Fortgang des Mischens, wenn das Beobachtungsfenster 2 durch Drehung nach oben bewegt wird, fällt das Mischgut im Mischbehälter nach unten und das Beobachtungsfenster 2 ist theoretisch frei von Mischgut. In dieser Position müssen die spektroskopischen Daten unterhalb des produktspezifischen Grenzwertes sinken, denn auf dem Fenster befindet sich kein Mischgut.

wird jedoch der produktspezifische Grenzwert der spektroskopischen Daten nicht innerhalb einer vorgegebenen Zeit, die von der Drehgeschwindigkeit des Mischbehälters bestimmt ist, unterschritten, dann ist das ein Zeichen, dass sich auf der inneren Oberfläche des Beobachtungsfensters 2 Ablagerungen des Mischgutes befinden, die die spektroskopischen Messdaten verfälschen. In diesem Fall wird von der Analyseeinheit ein Signal ausgegeben, welches die Information beinhaltet, dass das Beobachtungsfenster unzulässig stark verschmutzt ist.

Im Ausführungsbeispiel I wird dazu die Schwenkeinrichtung zum Betätigen der Schwenkwelle 7 in Betrieb gesetzt und der Schwenkwischer 8 wird beispielhaft dreimal über das Beobachtungsfenster 2 bewegt, so dass das Wischelement 9 auf dem Beobachtungsfenster 2 unerwünscht anhaftende Ablagerungen von Mischgut entfernt.

### Ausführungsbeispiel II

Zugehörig zum Ausführungsbeispiel II zeigt Figur 2 als Beobachtungsfenster ein Drehfenster 11, welches über eine Welle 12 in ähnlicher Weise wie im Ausführungsbeispiel I in der Halteeinrichtung 4 für den Sensor 3 gelagert ist. In der Behälterwand 1 befindet sich eine Öffnung 13 mit einem Dichtring 14. Die Öffnung 13 wird außen vom Drehfenster 11 abgedichtet" wobei das Drehfenster 11 drehbar in einer Fensteraufnahme 15 geführt ist. Die Halteeinrichtung 4 und die Fensteraufnahme 15 sind in der Praxis als Baueinheit ausgebildet.

Bei der Anwendung der Einrichtung entsprechend dem erfindungsgemäßen Verfahren, wie es im Ausführungsbeispiel I beschrieben ist, wird die Welle 12 in Bewegung gesetzt, wodurch das Drehfenster 11 an der Öffnung 13 mit dem Dichtring 14 vorbei gedreht. Auf dem Drehfenster 11 vorhandene Ablagerungen von Mischgut werden dabei vom Dichtring 14 entfernt. In der Folge befindet sich im Stillstand ein sauberes Drehfenster 11 vor dem Sensor 3.

### Ausführungsbeispiel III

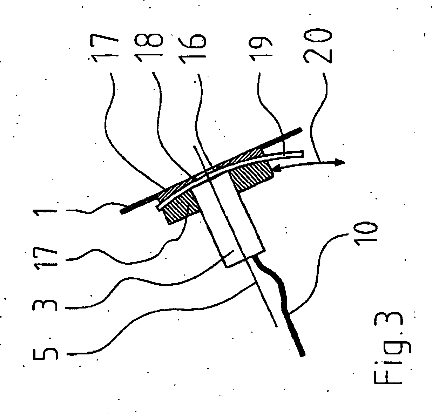

Im Ausführungsbeispiel III mit der zugehörigen Figur 3 ist ähnlich wie im Ausführungsbeispiel II in der Behälterwand 1 eine Öffnung 16 vorgesehen. Dabei ist die Öffnung 16 in einer Fensterführung 17 angeordnet, die außerhalb des Mischbehälters ein Schwenkscheibe 19 führt. Die Öffnung 16 ist mit einem Rundring 18 an der Fensterführung 17 umschlossen. Der Sensor 3 liegt von außen an der Schwenkscheibe 19 an. Entsprechend der in den Ausführungsbeispielen I und II beschriebenen Verfahrensführung wird bei der Betätigung die Schwenkscheibe 19 in Richtungen entsprechend der Richtungspfeile 20 geschwenkt. Wenn sich im Bereich der Öffnung. 16 Ablagerungen des Mischgutes befinden werden diese bei der Bewegung der Schwenkscheibe 19 am Rundring 18 abgewischt.

Die Ausführungsbeispiele II und III eignen sich besonders an Mischbehältern für sensible Produkte, die häufig effektiv gereinigt werden müssen. Gegenüber der Lösung nach Ausführungsbeispiel I weisen diese Lösungen weniger Spalte und abgedeckte Bereiche auf, die bei der Reinigung schwer zugänglich sind.

**Liste der verwendeten Bezugszeichen**

| | | | |
|---|---|---|---|
| 1 | Behälterwand | 2 | Beobachtungsfenster |
| 3 | Sensor | 4 | Halteeinrichtung |
| 5 | Achse | 6 | |
| 7 | Schwenkwelle | 8 | Schwenkwischer |
| 9 | Wischelement | 10 | verbindungskabel |
| 11 | Drehfenster | 12 | Welle |
| 13 | Öffnung | 14 | Dichtring |
| 15 | Fensteraufnahme | 16 | Öffnung |
| 17 | Fensterführung | 18 | Rundring |
| 19 | Schwenkscheibe | 20 | Richtungspfeil |

## Patentansprüche

1. Verfahren zur Überwachung der optischen Durchlässigkeit eines Beobachtungsfensters (2) für die spektroskopische Analyse der Homogenität eines Mischgutes in einem Mischbehälter mit einer Analyseeinheit, deren Sensor (3) außerhalb des Mischbehälters am Beobachtungsfenster (2) positioniert ist, bei dem die spektroskopischen Daten des Mischgutes während des Mischens permanent oder periodisch erfasst werden,
**dadurch gekennzeichnet, dass**
- in der Analyseeinheit ein produktspezifischer Grenzwert für die spektroskopischen Daten gespeichert wird, welcher durch die für das Mischgut zu erwartenden spektroskopischen Daten bestimmt wird, wenn sich das Mischgut auf dem Beobachtungsfenster (2) befindet und wenn das Beobachtungsfenster (2) frei von Mischgut ist,
- dass in Abhängigkeit der technologischen Werte des Mischverfahrens eine Zeit vorgegeben wird, innerhalb der die spektroskopischen Daten unterhalb des produktspezifischen Grenzwertes sinken müssen, und
- dass von der Analyseeinheit ein Signal ausgegeben wird, wenn die spektroskopischen Daten innerhalb der vorgegebenen Zeit nicht unterhalb des produktspezifischen Grenzwertes gesunken sind, welches die Information beeinhaltet, dass das Beobachtungsfenster (2) unzulässig stark verschmutzt ist.

2. Verfahren nach Anspruch 1, **dadurch gekennzeichnet, dass** das Signal der Analyseeinheit einer Schalteinheit zugeführt wird, die eine Reinigungsvorrichtung zur Reinigung der inneren Oberfläche des Beobachtungsfensters (2) in Betrieb setzt.

3. Einrichtung zur Reinigung eines Beobachtungsfensters (2) für die spektroskopische Analyse der Homogenität eines Mischgutes in einem Mischbehälter mit einer Analyseeinheit, deren Sensor außerhalb des Mischbehälters am Beobachtungsfenster (2) positionierbar ist, **dadurch gekennzeichnet, dass**
- eine Reinigungseinrichtung zur Reinigung des Beobachtungsfensters sowie
- eine Schalteinheit zur Inbetriebsetzung der Reinigungseinrichtung vorhanden sind,
- dass die Analyseeinheit einen Speicher aufweist, in den ein produktspezifischer Grenzwert für die spektroskopischen Daten gespeichert ist, welcher durch die für das Mischgut zu erwartenden spektroskopischen Daten bestimmt wird, wenn sich das Mischgut auf dem Beobachtungsfenster (2) befindet und wenn das Beobachtungsfenster (2) frei von Mischgut ist,
- dass die Analyseeinheit dafür ausgelegt ist, ein Signal auszugeben, wenn der produktspezifische Grenzwert während des Mischvorganges innerhalb einer vorgegebenen Zeit nicht unterschritten wird, und
- dass die Analyseeinheit derart mit der Schalteinheit verbunden ist, dass mit dem Anliegen des Signals die Schalteinheit die Reinigungseinrichtung in Betrieb setzen kann.

4. Einrichtung nach Anspruch 3, **dadurch gekennzeichnet, dass** als Reinigungseinrichtung eine mechanische Wischvorrichtung mit einem Schwenkwischer (8), einem Drehfenster (11) als Beobachtungsfenster in Kontakt mit einem Dichtring (14) oder eine Schwenkscheibe (19) als Beobachtungsfenster in Kontakt mit einem Dichtring (18) vorhanden ist.

5. Einrichtung nach Anspruch 3, **dadurch gekennzeichnet, dass** als Reinigungseinrichtung ein Vibrator vorgesehen ist, der außerhalb des Mischbehälters angeordnet und mit dem Beobachtungsfenster verbunden ist.

6. Einrichtung nach einem der Ansprüche 3 bis 5, **dadurch gekennzeichnet, dass** ein Positionsmelder vorhanden ist, der mindestens ein Signal abgibt, wenn die Position des Mischbehälters derart ist, dass sich kein Mischgut auf dem Beobachtungsfenster befindet.

7. Einrichtung nach Anspruch 6, **dadurch gekennzeichnet, dass** der Positionsmelder derart mit der Schalteinheit verbunden ist, dass die Reinigungseinrichtung nur in Betrieb gesetzt werden kann, wenn das Signal der Analyseeinheit und das Signal des Positionsmelders parallel an der Schalteinheit anliegen.

## Claims

1. Method for monitoring the optical transmissibility of an observation window (2) for the spectroscopic analysis of the homogeneity of a mixture material in a mixing container, having an analysis unit whose sensor (3) is positioned outside the mixing container on the observation window (2) in which the spectroscopic data of the mixture material is detected during the mixing continuously or periodically, **characterized in that**
- a product-specific limit value for the spectroscopic data is stored in the analysis unit, which limit value is determined by the spectroscopic data which is to be expected for the mixture material when the mixture material is located on the observation window (2) and when the observation window (2) is free from mixture material,
- a time within which the spectroscopic data must fall below the product-specific limit value is prespecified as a function of the technological values of the mixing process, and
- the analysis unit emits a signal if the spectroscopic data has not fallen below the product-specific limit value within the prespecified time, which signal contains the information that the observation window (2) is soiled to an unacceptable degree.

2. Method according to Claim 1, **characterized in that** the signal of the analysis unit is fed to a switching unit which activates a cleaning apparatus for cleaning the inside surface of the observation window (2).

3. Device for cleaning an observation window (2) for the spectroscopic analysis of the homogeneity of a mixture material in a mixing container, having an analysis unit whose sensor (3) is positioned outside the mixing container on the observation window (2), **characterized in that**
- a cleaning device for cleaning the observation window and
- a switching unit for activating the cleaning device are provided,
- the analysis unit has a memory in which a product-specific limit value for the spectroscopic data is stored, which limit value is determined by way of the spectroscopic data which is to be expected for the mixture material when the mixture material is located on the observation window (2) and when the observation window (2) is free from mixture material,
- the analysis unit is designed for emitting a signal if the product-specific limit value is not undershot during the mixing process within a prespecified time, and
- the analysis unit is connected to the switching unit such that, if the signal is present, the switching unit can activate the cleaning device.

4. Device according to Claim 3, **characterized in that** a mechanical wiping apparatus with a pivot wiper (8), a rotary window (11) as observation window in contact with a sealing ring (14) or a pivot pane (19) as observation window in contact with a sealing ring (18) is provided as the cleaning device.

5. Device according to Claim 3, **characterized in that** a vibrator is provided as the cleaning device, which is arranged outside the mixing container and is connected to the observation window.

6. Device according to one of Claims 3 to 5, **characterized in that** a position sensor is present, which emits at least one signal if the position of the mixing container is such that there is no mixture material on the observation window.

7. Device according to Claim 6, **characterized in that** the position sensor is connected to the switching unit such that the cleaning device can only be activated if the signal of the analysis unit and the signal of the position sensor are both present at the switching unit at the same time.

## Revendications

1. Procédé de surveillance de la transparence optique d'une fenêtre d'observation (2) pour l'analyse spectroscopique de l'homogénéité d'une matière mélangée dans un récipient de mélange muni d'une unité d'analyse dont le capteur (3) est placé à l'extérieur du récipient de mélange sur la fenêtre d'observation (2), avec lequel les données spectroscopiques de la matière mélangée sont détectées en permanence ou périodiquement pendant le mélange,
**caractérisé en ce**
- **qu'**une valeur limite spécifique au produit des données spectroscopiques est enregistrée dans l'unité d'analyse, laquelle est déterminée par les données spectroscopiques attendues pour la matière mélangée lorsque la matière mélangée se trouve sur la fenêtre d'observation (2) et lorsque la fenêtre d'observation (2) est dépourvue de matière mélangée,
- **qu'**une durée est prédéfinie en fonction des valeurs technologiques du procédé de mélange, pendant laquelle les données spectroscopiques doivent descendre au-dessous de la valeur limite spécifique au produit et
- **qu'**un signal est délivré par l'unité d'analyse lorsque les données spectroscopiques ne sont pas descendues au-dessous de la valeur limite spécifique au produit pendant la durée prédéfinie, lequel contient l'information selon laquelle la fenêtre d'observation (2) présente un taux d'encrassement excessivement élevé.

2. Procédé selon la revendication 1, **caractérisé en ce que** le signal de l'unité d'analyse est acheminé à une unité de commutation qui met en service un dispositif de nettoyage pour nettoyer la surface intérieure de la fenêtre d'observation (2).

3. Dispositif de nettoyage d'une fenêtre d'observation (2) pour l'analyse spectroscopique de l'homogénéité d'une matière mélangée dans un récipient de mélange muni d'une unité d'analyse dont le capteur peut être placé à l'extérieur du récipient de mélange sur la fenêtre d'observation (2), **caractérisé en ce que**
- il existe un dispositif de nettoyage pour nettoyer la fenêtre d'observation ainsi que
- une unité de commutation pour mettre en service le dispositif de nettoyage,
- l'unité d'analyse présente une mémoire dans laquelle est enregistrée une valeur limite spécifique au produit des données spectroscopiques, laquelle est déterminée par les données spectroscopiques attendues pour la matière mélangée lorsque la matière mélangée se trouve sur la fenêtre d'observation (2) et lorsque la fenêtre d'observation (2) est dépourvue de matière mélangée,
- l'unité d'analyse est conçue pour délivrer un signal lorsque la valeur limite spécifique au produit n'est pas franchie vers le bas au sein d'une durée prédéfinie pendant le processus de mélange, et
- l'unité d'analyse est reliée à l'unité de commutation de telle sorte que l'application du signal permet à l'unité de commutation de mettre le dispositif de nettoyage en service.

4. Dispositif selon la revendication 3, **caractérisé en ce que** le dispositif de nettoyage présent est un dispositif d'essuyage mécanique muni d'un essuie-glace pivotant (8), d'une fenêtre rotative (11) faisant office de fenêtre d'observation en contact avec une bague d'étanchéité (14) ou d'une vitre pivotante (19) faisant office de fenêtre d'observation en contact avec une bague d'étanchéité (18).

5. Dispositif selon la revendication 3, **caractérisé en ce que** le dispositif de nettoyage prévu est un vibrateur qui est disposé à l'extérieur du récipient de mélange et qui est relié avec la fenêtre d'observation.

6. Dispositif selon l'une des revendications 3 à 5, **caractérisé en ce qu'**il existe un détecteur de position qui délivre au moins un signal lorsque la position du récipient de mélange est telle qu'il n'y a pas de matière mélangée qui se trouve sur la fenêtre d'observation.

7. Dispositif selon la revendication 6, **caractérisé en ce que** le détecteur de position est relié avec l'unité de commutation de telle sorte que le dispositif de nettoyage ne peut être mis en service que lorsque le signal de l'unité d'analyse et le signal du détecteur de position sont appliqués en parallèle à l'unité de commutation.
